# EUROPEAN PATENT SPECIFICATION

(11) **EP 1 154 640 B1**
(45) Date of publication and mention of the grant of the patent: **28.03.2012**
(21) Application number: 01300415.5
(22) Date of filing: 18.01.2001
(51) Int. Cl.: H04N 5/232, H04N 5/225

(54) **Exchangeable connecting device between video camera and automatic iris lens**
Auswechselbare Verbindungsvorrichtung zwischen einer Videokamera und einem Objektiv mit einer automatischen Blendeneinrichtung
Appareil de connection échangeable entre une caméra vidéo et un objectif à iris automatique

(30) Priority: 08.05.2000 JP 2000134933
(43) Date of publication of application: 14.11.2001
(73) Proprietor: Watec Co., Limited, Tsuruoka-shi, Yamagata-ken (JP)
(72) Inventor: Igarashi, Shigehisa, Tsuruoka-Shi, Yamagata-Ken (JP)
(74) Representative: Haley, Stephen

(56) References cited:
- EP-A- 0 482 640
- EP-A- 0 718 672
- US-A- 3 968 504
- US-A- 4 547 808
- US-A- 5 767 500

## Description

This invention relates to an exchangeable connecting device between a video camera and an automatic iris lens, especially an exchangeable connecting device between a video camera M and an automatic iris lens L having a galvanometer control circuit p or an automatic iris lens L not having a galvanometer control circuit p.

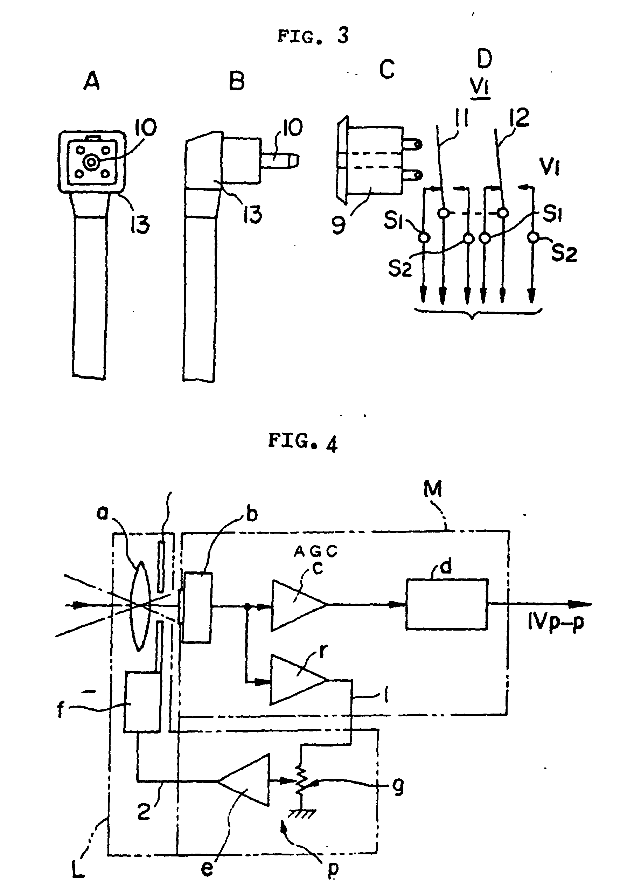

Fig. 4 shows a conventional connecting device between video camera M such as a CCD (Charged Couple Device) a camera, an area image sensor and an automatic iris lens L. Referring to Fig. 4, operational principles of an automatic iris lens L and video camera M are explained.

A light signal passing through a lens a is changed into an electrical signal by an area sensor b, amplified by AGC amplifier circuit c, processed by signal processing circuit d, and output as a regular video signal IVpp.

On the other hand, a part of the electrical signal of area sensor b is amplified by constant amplifier r of 6 dB to 12 dB and output as a light control signal 1 for automatic iris lens L. Light control signal 1 is integrally amplified by level setting circuit e, and provides driving DC current 2 for galvanometer f of the iris control mechanism of the automatic iris lens L. Variable resistor g is to set the iris value to a suitable value. Namely, DC current 2 increases according to an increase in light control signal 1 and closes iris I. On the contrary DC current 2 decreases according to a decrease in light control signal 1 and opens iris I, so that video camera M operates according to a suitable light control signal 1.

Normally, camera M needs various lenses, therefore camera M and the lens are independent and according to necessity, connected by a thread.

On the other hand, information such as said light control signal 1 or driving DC current 2 are connected by a cable and connector.

However, there are two type of automatic iris lens L as follows:

### 1. VS control type automatic iris lens L₁.

This VS control type automatic iris lens L₁ includes galvanometer control circuit p in which iris I is controlled by a part of light control signal 1 of a video signal.

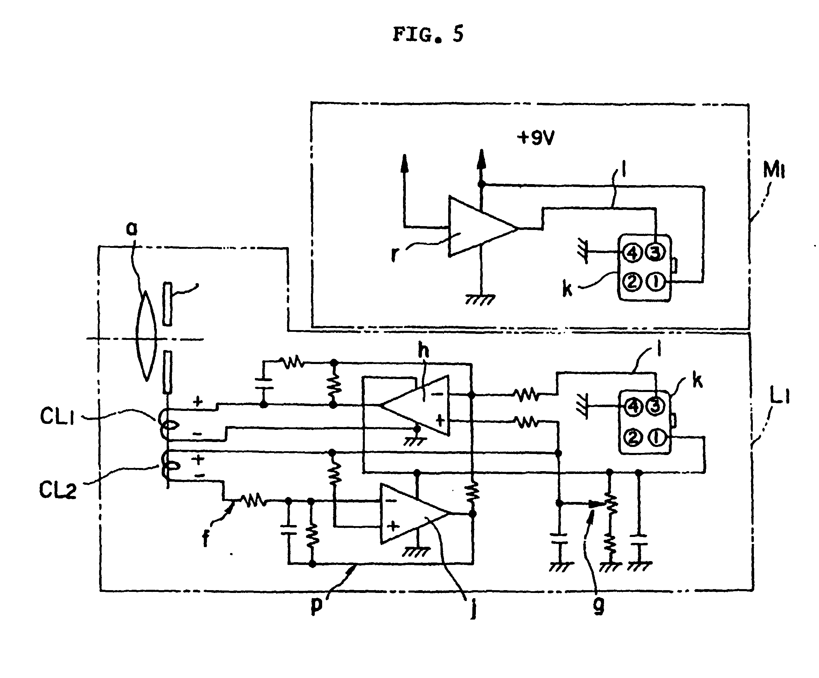

Fig. 5 shows a connecting device of a conventional video camera M₁ and VS control type automatic iris lens L₁ having a galvanometer control circuit p with the same numerals used for the same or similar parts of Fig. 4.

Video camera M₁ and VS control type automatic iris lens L₁ have connectors k, k connected by cable 3 respectively and terminals ①, ②, ③, ④ of the connectors k, k are connected by the cable 3 respectively. Terminal ① is connected to an electric circuit, terminals ②, ② are NC terminals (no connection), terminals ③, ③ are connected to light control signal 1, terminals ④, ④ are connected to ground (earth).

Operation of this circuit is as follows: light control signal 1 input from terminals ③ is integral amplified by driving amplifier h, and video control signal 1 of video camera M₁ set by variable resistor g reaches a level voltage corresponding to regular video signal IVpp. Current in driving coil CL₁ of galvanometer f decreases and controls iris I. Braking coil CL₂ suppresses rapid operation of driving coil CL₁. Braking coil CL₂ detects reverse voltage generated in galvanometer f, this reverse voltage is amplified in amplifier j, fedback to driving amplifier h, and controls the movement of galvanometer f so as to have a smooth and stable operation.

### 2. DC control type automatic iris lens L₂.

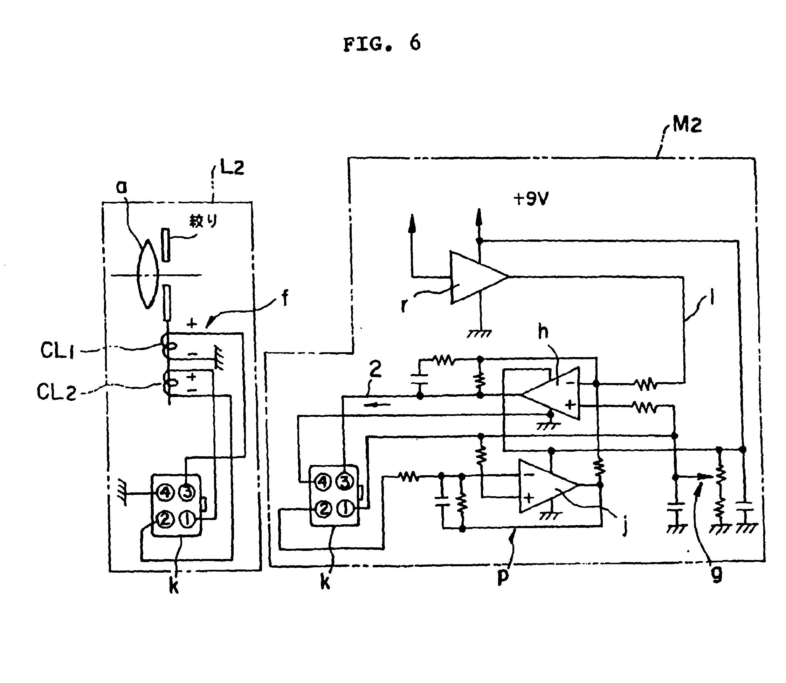

This DC control type automatic iris lens L₂ (Fig. 6) is intended to lower the lens price, which only includes galvanometer f and does not include galvanometer control circuit p (Fig. 5) and is driven by a suitable DC electric source from video camera M₂.

Fig. 6 shows a connecting device of a conventional video camera M₂ and DC control type automatic iris lens L₂, without galvanometer control circuit p. As shown in Fig. 6, video camera M₂ and DC control type automatic iris lens L₂ have connectors k, k connected by a cable 3 respectively. Terminal ① of connectors k, k is connected to the positive (+) pole of braking coil CL₂, terminal ② is connected to the negative (-) pole of braking coil CL₂, terminal ③ is connected to the positive (+) pole of driving coil CL₁, terminal ④ is connected to the negative (-) pole.

Operation of this circuit is as follows: in video camera M₂, video control signals 1 is integral amplified by driving amplifier h, changed into suitable driving DC current 2 set in variable resistor g, and drives driving coil CL₁ through terminal ③, ④ of connectors k, k.

Reverse voltage generated in braking coil CL₂ is fed to video camera M₂, through terminals ①, ② as braking information.

Namely, this DC control type automatic iris lens L₂ eliminates galvanometer control circuit p (Fig. 5) against VS control type automatic iris lens L₁ so as to be simple in construction.

Therefore, to use this DC control type automatic iris lens L₂, it is necessary to provide galvanometer control circuit p in video camera M₂.

However in actuality, it is desired to freely use said two kinds of VS control type automatic iris lens L₁ or DC control type automatic iris lens L₂. And in actuality, connectors k, k used in said two kinds of VS control type automatic iris lens L₂ or DC control type automatic iris lens L₂ are the same in construction but connections are different.

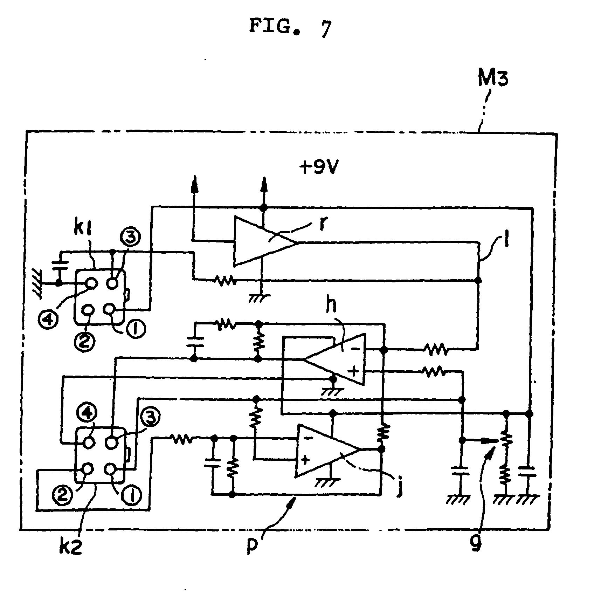

Fig. 7 shows a circuit of a conventional exchangeable connecting device between video camera M₃ and automatic iris lens L₁ having galvanometer control circuit p or automatic iris lens L₂ but not having galvanometer control circuit p.

Video camera M₃ has two connectors k₁ and k₂, one is for lens L₁ and the other is for lens L₂.

Terminal ③ of connector k₁ for lens L₁ outputs video control signal 1 without galvanometer control circuit p. On the other hand, in connector k₂, video control signal 1 is integral amplified by galvanometer control circuit p, changed into a suitable driving DC current 2, having its level set by variable resistor g so as to correspond to regular video signal IVpp and terminal ③ of connector k₂ for lens L₂ and outputs driving DC current 2.

Therefore, the signal for controlling lens L₁ and signal for controlling lens L₂ are output from connector k₁ and connector k₂, respectively.

However, it is necessary to change the connector according to the lens being used and this is troublesome and can cause errors.

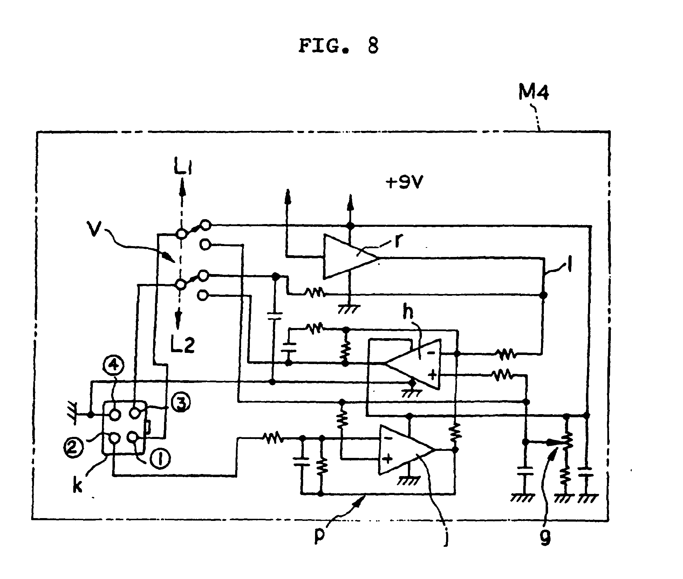

Fig. 8 shows a circuit of conventional general video camera M₄, provided with switch v instead of two connectors for an exchangeable connection of lens L₁ having galvanometer control circuit p or lens L₂ without galvanometer control circuit p.

Namely, video control signals 1 and driving DC current 2 of galvanometer f are switched by switch v, and fed to common connector k. Other terminals are also switched.

However, it is necessary to change switch v according to the lens being used and this is troublesome and can cause errors.

As explained above, in a conventional device, it is necessary to confirm the lens to be used and false connections of the connector or false switching can cause errors and damage of the device.

This invention intends to eliminate said drawbacks, and an object of this invention is to provide an exchangeable connecting device between a video camera and an automatic iris lens in which it is possible to use one common connector k to connect different kind of lenses. It is possible to use either kind of lens L₁ or L₂ without confirming the kind of lens to be used.

In a first aspect, the invention consists in a video camera for connecting an automatic iris lens comprising:
a common connector for connecting either a VS control type of automatic iris lens with a galvanometer control circuit or a DC control type of automatic iris lens without a galvanometer control circuit, the common connector having terminals including a first terminal and a second terminal,
an electric power source,
a galvanometer control circuit, and
means for selectively connecting a video control signal of said video camera to said common connector,
characterised in that
the first terminal is connected to the electric power source,
the second terminal is connected to the galvanometer control circuit of the video camera through a capacitor, and
the selective connecting means comprises:
   a single analogue switch for connecting the video control signal of said video camera to a third terminal of said common connector, bypassing said galvanometer control circuit when the connector of a VS control type of automatic iris lens is connected to the common connector and for connecting the video control signal of said video camera to the third terminal of said common connector through said galvanometer control circuit so that a driving DC current output from said galvanometer control circuit is connected to said common connector when the connector of a DC control type of automatic iris lens is connected to the common connector, and
   a detector for detecting a variation of voltage or current at the second terminal of said common connector, said variation in voltage or current activating said analogue switch according to the type of the automatic iris lens connected to the camera.

This present invention may detect a variation of voltage or current at terminals of the common connector according to the connection of the VS control type automatic iris lens L₁ or the DC control type automatic iris lens L₂.

The invention may further comprise a mechanical switch v₁ is used instead of said analogue switch t.

In a second aspect, the invention consists in a video camera system as set out in claim 2, incorporating the video camera according to the first aspect.

In a third aspect, the invention consists in a video camera for connecting an automatic iris lens comprising:
a common connector for connecting either a VS control type of automatic iris lens with a galvanometer control circuit or a DC control type of automatic iris lens without a galvanometer control circuit, the common connector having terminals including a first terminal and a second terminal,
an electric power source,
a galvanometer control circuit, and
means for selectively connecting a video control signal of said video camera to said common connector,
characterised in that the
the first terminal is connected to the electric power source,
the second terminal is connected to the galvanometer control circuit of the video camera through a capacitor, and
the selective connecting means comprises an interference preventing element and a diode, the video control signal of said video camera being connected through said interference preventing element to said common connector, bypassing said galvanometer control circuit, when a connector of a VS control type of automatic iris lens is connected to the common connector and the video control signal of said video camera being connected to said common connector through said galvanometer control circuit followed by said diode so that a driving DC current output from said galvanometer control circuit is connected to said common connector when a connector of a DC control type of automatic iris lens is connected to the common connector.

In a fourth aspect, the invention consists in a video camera system as set out in claim 5, incorporating the video camera according to the third aspect.

In the drawings:
Fig. 1(A) shows a block diagram of embodiment 1 of this invention; while Fig. 1 (B) shows a circuit of embodiment 1.
Fig. 2(A) shows a block diagram of embodiment 2 of this invention; while Fig. 2(B) shows a circuit of embodiment 2.
Figs. 3(A) through (D) show embodiment 3 of this invention; Fig. 3(A) is a front view of connector k plug on the lens side; Fig. 3(B) is a side view of the plug; Fig. 3(C) is a side view of connector k socket on the camera side; and Fig. 3(D) is a circuit diagram of the socket.
Fig 3(E) is a front view of connector k plug.
Fig 3(F) is a side view of the plug.
Fig. 4 shows a conventional circuit connecting device between video camera M and automatic iris lens L.
Fig. 5 shows a connecting device circuit of a conventional video camera M₁ and VS control type automatic iris lens L₁ having galvanometer control circuit p.
Fig. 6 shows a connecting device for a conventional video camera M₂ and DC control type automatic iris lens L₂, without galvanometer control circuit p.
Fig. 7 shows a conventional exchangeable connecting device between video camera M₃ and automatic iris lens L₁, having galvanometer control circuit p or automatic iris lens L₂ not having galvanometer control circuit p.
Fig. 8 shows a circuit of a conventional general video camera M₄, provided with switch v instead of two connectors for an exchangeable connection of lens L₁, having galvanometer control circuit p or lens L₂, without galvanometer control circuit p.

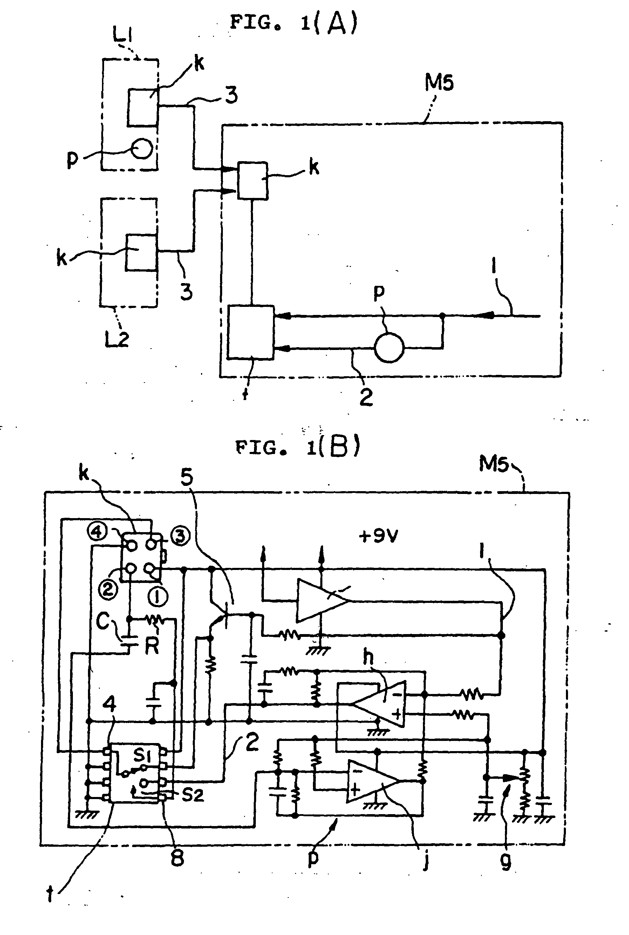

Fig. 1(A) shows a block diagram of embodiment 1 of this invention; Fig. 1(B) shows a circuit of embodiment 1 with the same reference numerals used for the same parts of previous Figures.

This embodiment 1 uses an analogue switch t. As shown in Fig. 1(A), this invention is an exchangeable connecting device between video camera M₅ such as a CCD (Charged Couple Device) camera, area image sensor and automatic iris lens. In said video camera M₅ one of video control signals 1 is amplified the output of the light sensor and is directly connected to analogue switch t, while the other is connected through galvanometer control circuit p to analogue switch t, with said analogue switch t being connected to one common connector k. When VS control type automatic iris lens L₁ is connected to connector k, video control signal 1, amplified the output of the light sensor is directly connected to analogue switch t.

When as a DC control type automatic iris lens L₂, said analogue switch t is switched and video control signal 1 is amplified by said galvanometer control circuit p, the output of the light sensor is connected to connector k as control current 2 of galvanometer f corresponding to video signal IVpp.

As shown Fig. 1(B), said analogue switch t is an electronic switch having switch terminals S₁, S₂ and normally terminal of switch S₁ connects to common terminal 4. At the active state by adding a voltage to control terminal 8, terminal of switch S₂ connects to common terminal 4 and switch S₁ opens.

Control terminal 8 is connected to terminal ② of connector k through resistor R. On the video camera M₅ side, terminal ① of connector k is connected to a positive (+) electric source (normally DC 9V), terminal ① of connector k of the VS control type automatic iris lens L₁ side is connected to the driving part of galvanometer control circuit p (see Fig. 5), and terminal ① of connector k of a DC control type automatic iris lens L₂ a side is connected to braking coil CL₂ (see Fig.6).

Terminal ② of connector k of video camera M₅ side is connected to amplifier j of galvanometer control circuit p. Terminal ② of connector k of VS control type automatic iris lens L₁ side is NC (no connection) (see Fig. 6). Terminal ① and ② of connector k of automatic iris lens L₂ side are connected to braking coil CL₂ (see Fig. 6).

Terminal ③ of connector k of video camera M₅ side is connected to common terminal 4. Terminal ③ of connector k of VS control type automatic iris lens L₁ side is connected to driving coil CL₁, through amplifier h of galvanometer control circuit p (see Fig. 5), and terminal ③ of connector k of a DC control type automatic iris lens L₂ side is connected to driving coil CL₁ (see Fig. 6).

Terminals ④, ④, ④ of connectors k, k, k on every side are connected to GND.

In this video camera M₅, a video signal from a light sensor is amplified by constant amplifier r (normally 6 dB to 12 dB) to be a video control signal 1. Video control signal 1 is connected to a terminal of switch S₁ of analogue switch t through buffer transistor 5. While this video control signal 1 is integral amplified by driving amplifier h of galvanometer control circuit p and connected to terminal ③ of connector k through switch S₂ as a driving DC current 2 corresponding to regular video signal IVpp. The level of driving DC current 2 is adjusted by variable resistor g.

When connector k of VS control type automatic iris lens L₁ is connected to connector k, video control signals 1 are directly fed through a terminal of switch S₁, of analogue switch t, common terminal 4, terminal ③ of connector k to automatic iris lens L₁.

When a DC control type automatic iris lens L₂ is connected to connector k, video control signals 1 are fed through galvanometer control circuit p, terminal of switch S₂, common terminal 4, terminal ③ of connector k to automatic iris lens L₂ as driving DC current 2.

Namely, automatic iris lens L₁ is connected to video camera M₅, analogue switch t is in the state of switch S₁ being connected to common terminal 4 because terminal ② is NC (no connection) (see Fig. 5).

Automatic iris lens L₂ is connected to video camera M₅, voltage is added to terminal ② through braking coil CL₂, and analogue switch t is in the state of switch S₂ being connected to common terminal 4.

As explained above, in video camera M₅, a change of voltage or current detected according to the connection of VS control type automatic iris lens L₁ or a DC control type automatic iris lens L₂, analogue switch t is switched. Analogue switch t acts as a detecting circuit in exchangeable connecting device between a video camera and an automatic iris lens.

Operation of above device is as follows:
When connector k of video camera M₅ is connected to connector k of VS control type automatic iris lens L₁, video control signals 1 output from constant amplifier r are connected to terminal ③ of connector k through buffer transistor 5, and switch S₁ of analogue switch t, and automatic iris lens L₁ operates.
When connector k of video camera M₅ is connected to connector k of a DC control type automatic iris lens L₂, said video control signals 1 regulated by driving amplifier h of galvanometer control circuit p to be driving DC current 2, driving DC current 2 passes switch S₂ of analogue switch t, flows to driving coil CL₁ and operates automatic iris lens L₂.

While reverse voltage generated in braking coil CL₂ is output to terminal ② in addition to electric source voltage, added to amplifier j and this amplified braking signal feedback to driving amplifier h, make the movement of galvanometer f smooth, and stable operation is obtained.

As explained above, any of connector k of VS control type automatic iris lens L₁, or a DC control type automatic iris lens L₂ is connected, normally operates.

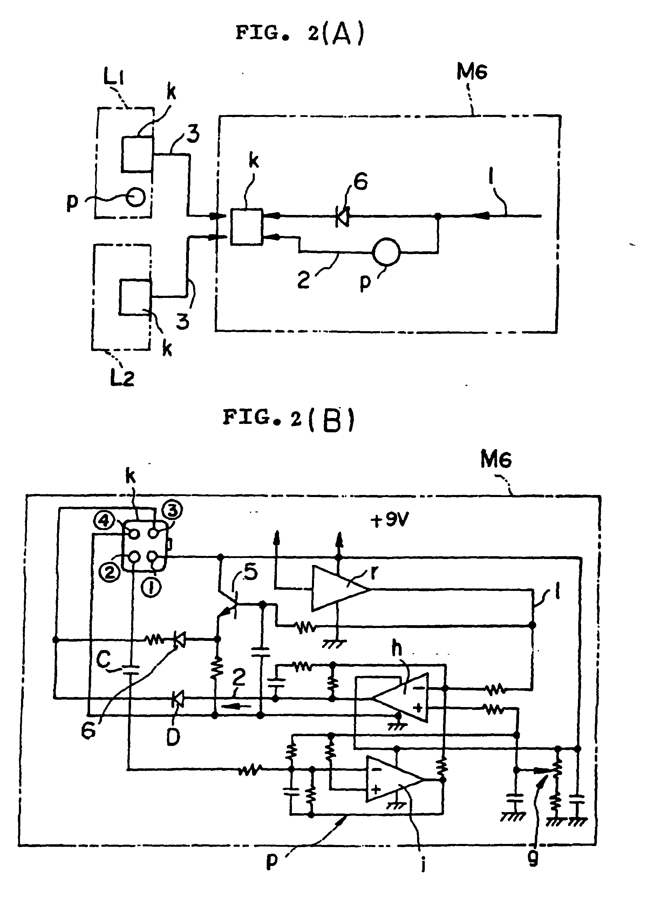

Fig. 2(A) shows a block diagram of embodiment 2 of this invention. Fig. 2(B) shows a circuit of embodiment 2 with same reference numerals used for the same parts of the previous Figures. In this embodiment 2, analogue switch t of video camera M₅ in embodiment 1 is eliminated and an interference preventing element such as diode 6 is employed and two kinds of signals correspond to connected lens L₁ or L₂ are used.

As shown in Fig. 2 (A), an exchangeable connecting device is between video camera M₆ such as a CCD (Charged Couple Device) camera, area image sensor and automatic iris lens. In said video camera M₆ one of said video control signals 1 are connected through interference preventing element 6 to one common connector k and the other is connected to galvanometer control circuit p to said one common connector k. When VS control type automatic iris lens L₁ is connected to connector k, video control signals 1 is connected through interference preventing element 6 to one common connector k. When a DC control type automatic iris lens L₂ is connected, video control signals 1 is connected to one common connector k as driving DC current 2 of video camera M₆ integral amplified by galvanometer control circuit p.

As shown in Fig. 2(B), in said video camera M₆ such as a CCD (Charged Couple Device) camera, area image sensor, video control signal 1 is connected to terminal ③ of connector k through interference preventing element 6. While, said video control signals 1 is connected through galvanometer control circuit p driving DC current 2 of galvanometer f of regular level is connected to terminal ③ of common connector k through diode D. Therefore, in terminal ③, video control signal 1 is superimposed on driving DC current 2. This video control signal 1 is a part of video signal IVpp and deemed as an alternative signal.

In said video camera M₆, terminal ① of connector k is connected to a positive (+) electric source (normally DC 9V) and the driving part of galvanometer control circuit p. Terminal ① of connector k of VS control type automatic iris lens L₁ is connected to a driving part of galvanometer control circuit p (see Fig. 5). Terminal ① of connector k of automatic iris lens L₂ side is connected to braking coil CL₂ (see Fig. 6).

Terminal ② of connector k of video camera M₆ side is connected to amplifier 3 of galvanometer control circuit p. As explained, terminal ② of connector k of VS control type automatic iris lens L₁ side is NC (no connection) (see Fig. 5). Terminal ② of connector k of automatic iris lens L₂ side is connected to braking coil CL₂ (see Fig. 6).

As explained, terminal ③ of connector k of video camera M₆ side is connected to buffer transistor 5 through interference preventing element 6, connected to amplifier h of galvanometer control circuit p. As explained, terminal ③ of connector k of VS control type automatic iris lens L₁ side is connected to driving coil CL₁ through amplifier h of galvanometer control circuit p (see Fig. 5). Terminal ③ of connector k of a DC control type automatic iris lens L₂ side is connected to driving coil CL₁ (see Fig. 6).

Terminals ④, ④, ④ of connectors k, k, k on every side are connected to GND.

Operation of above device is as follows:
When connector k of video camera M₅ is connected to connector k of VS control type automatic iris lens L₁, as the input impedance is high enough, a DC component is prevented by a condenser, driving DC current 2 is ignored and, video control signals 1 is connected to terminal ③ through buffer transistor 5 and interference preventing element 6, automatic iris lens L₁ works only by a component of video control signals 1 (see Fig.5).
When connector k of video camera M₅ is connected to connector k of DC control type automatic iris lens L₂, driving coil CL₁ is connected to terminals ③, ④ video control signals 1 are ignored and driving DC current 2 flows to driving coil CL₁ and controls iris I (see Fig. 6).

In Fig. 2(B), a diode is shown as interference preventing element 6, a suitable resistor, transistor, condenser, etc. may be used to prevent damage to other elements by a reverse current and interference of signals.

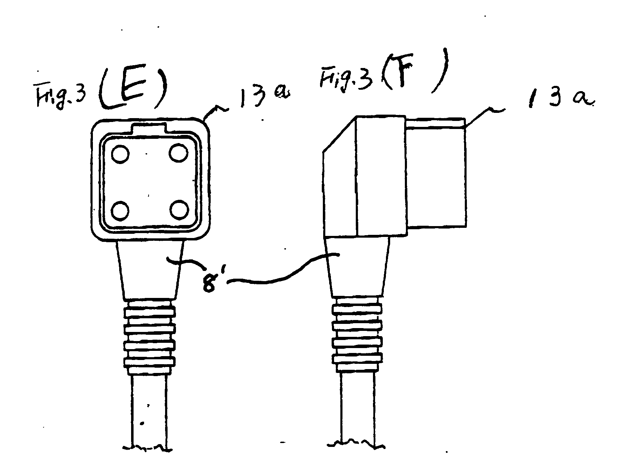

Fig. 3 shows embodiment 3 of this invention, in which mechanical switch v₁ a is employed instead of analogue switch t or switch v in Fig. 8.

In this switch v₁, construction of a plug in a connector on the lens side and a socket in a connector of the camera side are changed. Fig. 3 shows embodiment 3 of this invention. Fig. 3(A) is a front view of a connector k plug on the lens side. Fig. 3(B) is a side view of the plug. Fig. 3(C) is a side view of socket 9 of connector k on the camera side. And Fig. 3(D) is a circuit diagram of the socket.

As shown in Fig. 3, among plugs 13, 13 in connector k of automatic iris lens L₁, L₂, the lens sides form switch v₁, one of plugs 13 has no projection 10 as shown in Figs 3(E) and (F) but other plugs 13 has projection 10 as shown in Figs. 3(A) and (B). Socket 9 of connector k of the camera side provides elastic pieces 11, 12 as shown in Fig. 3(C), which engage said projection 10.

Operation of above device is as follows:
According to the use of lens L₁ or L₂, said projection 10 exists or does not exist, and engagement with elastic piece 11, 12 exists or does not exist, and circuit of switch v₁ changes. Therefore, using iris lens L₁, L₂ lens is distinguished and acts as switch v in Fig. 8 and a user can use either of iris lens L₁ or lens L₂ without paying attention.

In prior art explained in Fig. 8, it is possible to accomplish the effect of this invention by replacing the switch v with this switch v₁ formed by plugs 13 and socket 9.

According to this invention, it is possible to use different kinds of iris lens L₁ or lens L₂ connected to its connector without paying particular attention to the kind of lens being used.

## Claims

1. A video camera (M5) for connecting an automatic iris lens comprising:
a common connector (k) for connecting either a VS control type of automatic iris lens (L₁) with a galvanometer control circuit or a DC control type of automatic iris lens (L₂) without a galvanometer control circuit, the common connector (k) having terminals including a first terminal (①) and a second terminal (②),
an electric power source,
a galvanometer control circuit (p), and
means (t, v₁) for selectively connecting a video control signal (1, 2) of said video camera to said common connector (k),
**characterised in that**
the first terminal (①) is connected to the electric power source,
the second terminal (②) is connected to the galvanometer control circuit (p) of the video camera through a capacitor (C), and
the selective connecting means comprises:
a single analogue switch (t) for connecting the video control signal (1) of said video camera to a third terminal (③) of said common connector (k), bypassing said galvanometer control circuit (p) when the connector of a VS control type of automatic iris lens (L₁) is connected to the common connector (k) and for connecting the video control signal (1) of said video camera to the third terminal (③) of said common connector (k) through said galvanometer control circuit (p) so that a driving DC current (2) output from said galvanometer control circuit (p) is connected to said common connector (k) when the connector of a DC control type of automatic iris lens (L₂) is connected to the common connector (k), and
a detector (8) for detecting a variation of voltage or current at the second terminal (②) of said common connector (k), said variation in voltage or current activating said analogue switch (t) according to the type of the automatic iris lens connected to the camera.

2. A video camera system comprising:
an automatic iris lens including a galvanometer driving coil (CL₁), a galvanometer braking coil (CL₂), and a connector (k), the automatic iris lens being either
a VS control type of automatic iris lens (L₁) with a galvanometer control circuit (p) connected to drive its galvanometer driving coil (CL₁) wherein a second terminal (②) of its connector (k) is unconnected and a third terminal (③) is connected to an input of its galvanometer control circuit (p), or
a DC control type of automatic iris lens (L₂) without a galvanometer control circuit and with a first terminal (①) of its connector (k) connected to one terminal of its braking coil (CL₂) and a second terminal (②) of its connector connected to the other terminal of its braking coil,
the video camera (M5) according to claim 1, the common connector of the video camera having terminals including the first terminal (①), the second terminal (①) and the third terminal (①), the terminals corresponding to the terminals of the automatic iris lens connector,
the electric power source of the video camera having a DC voltage,
the galvanometer control circuit (p) of the video camera for receiving a video control signal (1) of the video camera and producing a galvanometer driving DC current (2),
the selective connecting means (t, v₁) for selectively connecting the video control signal (1) of said video camera or the galvanometer driving DC current (2) to the third terminal (③) of the video camera common connector (k),
wherein when the connector (k) of the DC control type of automatic iris lens (L₂) is connected to the video camera common connector (k), the second terminal (②) of the video camera common connector (k) receives a reverse voltage signal generated in the braking coil (CL₂) in addition to the DC voltage of the electric source, the capacitor blocks the DC voltage of the electric voltage source and passes the reverse voltage signal to the galvanometer control circuit (p) of the video camera, and the selective connecting means (t, v₁) connects the galvanometer driving DC current (2) to the third terminal (③) of the video camera connector (k), and
wherein when the connector (k) of the VS control type of automatic iris lens (L₁) is connected to the video camera common connector (k), the selective connecting means (t, v₁) connects the video control signal (1) of the video camera to the third terminal (③) of the video camera connector (k).

3. A video camera (M6) for connecting an automatic iris lens comprising:
a common connector (k) for connecting either a VS control type of automatic iris lens (L₁) with a galvanometer control circuit or a DC control type of automatic iris lens (L₂) without a galvanometer control circuit, the common connector (k) having terminals including a first terminal (①) and a second terminal (②),
an electric power source,
a galvanometer control circuit (p), and
means for selectively connecting a video control signal (1, 2) of said video camera to said common connector (k),
**characterised in that** the
the first terminal (①) is connected to the electric power source,
the second terminal (②) is connected to the galvanometer control circuit (p) of the video camera through a capacitor (C), and
the selective connecting means comprises an interference preventing element (6) and a diode (D), the video control signal (1) of said video camera being connected through said interference preventing element to said common connector (k), bypassing said galvanometer control circuit (p), when a connector of a VS control type of automatic iris lens (L₁) is connected to the common connector (k) and the video control signal (1) of said video camera being connected to said common connector (k) through said galvanometer control circuit (p) followed by said diode (D) so that a driving DC current (2) output from said galvanometer control circuit (p) is connected to said common connector (k) when a connector of a DC control type of automatic iris lens (L₂) is connected to the common connector (k).

4. The video camera according to claim 3, wherein the interference preventing element comprises one of a diode (6), a resistor, a transistor or a capacitor.

5. A video camera system comprising:
an automatic iris lens including a galvanometer driving coil (CL₁), a galvanometer braking coil (CL₂), and a connector (k),
the automatic iris lens being either
a VS control type of automatic iris lens (L₁) with a galvanometer control circuit (p) connected to drive its driving coil (CL₁) wherein a second terminal (②) of its connector (k) is unconnected and a third terminal (③) is connected to an input of its galvanometer control circuit (p), or
a DC control type of automatic iris lens (L₂) without a galvanometer control circuit and with a first terminal (①) of its connector (k) connected to one terminal of its braking coil (CL₂) and a second terminal (②) of its connector connected to the other terminal of its braking coil,
the video camera (M6) according to claim 3 or claim 4, the common connector of the video camera having terminals including the first terminal (①), the second terminal (②) and a third terminal (③), the terminals corresponding to the terminals of the automatic iris lens connector,
the galvanometer control circuit (p) of the video camera for receiving a video control signal (1) of the video camera and producing a galvanometer driving DC current (2), and
the selective connecting means for selectively connecting the video control signal (1) of said video camera or the galvanometer driving DC current (2) to the third terminal (③) of the video camera common connector (k),
the video control signal (1) of said video camera (M6) being connected through said interference preventing element (6) to the third terminal (③) of said common connector (k) of the video camera, bypassing said galvanometer control circuit (p), when the connector (k) of the VS control type of automatic iris lens (L₁) is connected to the common connector (k) of the video camera, and
the video control signal (1) of said video camera (M6) being connected to the third terminal (③) of said connector (k) of the video camera through said galvanometer control circuit (p) so that the galvanometer driving DC current (2) output from said galvanometer control circuit (p) of the video camera is connected to the third terminal (③) of said common connector (k) of the video camera through said diode (D) when the connector of the DC control type of automatic iris lens (L₂) is connected to the common connector (k) of the video camera.

## Patentansprüche

1. Videokamera (M5) für das Ankoppeln einer automatischen Blendenvorrichtung, die Folgendes umfasst:
einen allgemeinen Verbinder (k) für das Ankoppeln einer VS-gesteuerten automatischen Blendenvorrichtung (L₁) mit Galvanometersteuerschaltung oder einer DC-gesteuerten automatischen Blendenvorrichtung (L₂) ohne Galvanometersteuerschaltung, wobei der allgemeine Verbinder (k) Anschlüsse aufweist, zu denen ein erster Anschluss () und ein zweiter Anschluss () gehören,
eine elektrische Stromquelle,
eine Galvanometersteuerschaltung (p) und
Mittel (t, v₁) für das gezielte Ankoppeln eines Videosteuersignals (1, 2) der Videokamera an den allgemeinen Verbinder (k),
**dadurch gekennzeichnet, dass**
der erste Anschluss () an die elektrische Stromquelle gekoppelt ist,
der zweite Anschluss () über einen Kondensator (C) an die Galvanometersteuerschaltung (p) der Videokamera gekoppelt ist, und
wobei das Mittel für das gezielte Ankoppeln Folgendes umfasst:
einen einzelnen Analogschalter (t) für das Ankoppeln des Videosteuersignals (1) der Videokamera an einen dritten Anschluss () des allgemeinen Verbinders (k), wobei die Galvanometersteuerschaltung (p) umgangen wird, wenn der Verbinder einer VS-gesteuerten automatischen Blendenvorrichtung (L₁) an den allgemeinen Verbinder (k) angekoppelt wird, und für das Ankoppeln des Videosteuersignals (1) der Videokamera über die Galvanometersteuerschaltung (p) an den dritten Anschluss () des allgemeinen Verbinders (k), so dass ein von der Galvanometersteuerschaltung (p) ausgegebener Antriebsgleichstrom (2) an den allgemeinen Verbinder (k) gekoppelt ist, wenn der Verbinder einer DC-gesteuerten automatischen Blendeneinrichtung (L₂) an den allgemeinen Verbinder (k) gekoppelt ist, und
ein Detektor (8) für das Erfassen einer Schwankung der Spannung oder des Stroms am zweiten Anschluss () des allgemeinen Verbinders (k), wobei diese Schwankung der Spannung oder des Stroms entsprechend dem Typ der an die Kamera gekoppelten automatischen Blendenvorrichtung den Analogschalter (t) aktiviert.

2. Videokamerasystem, das Folgendes umfasst:
eine automatische Blendenvorrichtung mit einer Galvanometerantriebsspule (CL₁), einer Galvanometerbremsspule (CL₂) und einem Verbinder (k), wobei es sich bei der automatischen Blendenvorrichtung entweder
um eine VS-gesteuerte automatische Blendenvorrichtung (L₁) mit Galvanometersteuerschaltung (p) handelt, die so angekoppelt ist, dass sie ihre Galvanometerantriebsspule (CL₁) antreibt, wobei ein zweiter Anschluss () ihres Verbinders (k) nicht angekoppelt und ein dritter Anschluss () an einen Eingang ihrer Galvanometersteuerschaltung (p) gekoppelt ist, oder
um eine DC-gesteuerte automatische Blendenvorrichtung (L₂) ohne Galvanometersteuerschaltung, bei der ein erster Anschluss () ihres Verbinders (k) an einen Anschluss ihrer Bremsspule (CL₂) und ein zweiter Anschluss () ihres Verbinders an den anderen Anschluss ihrer Bremsspule gekoppelt ist,
die Videokamera (M5) nach Anspruch 1, wobei der allgemeine Verbinder der Videokamera Anschlüsse aufweist, zu denen der erste Anschluss (), der zweite Anschluss () und der dritte Anschluss () gehören, wobei die Anschlüsse den Anschlüssen des Verbinders der automatischen Blendenvorrichtung entsprechen,
wobei die elektrische Stromquelle der Videokamera eine Gleichspannung aufweist,
die Galvanometersteuerschaltung (p) der Videokamera für das Empfangen eines Videosteuersignals (1) der Videokamera und das Erzeugen eines Galvanometerantriebsgleichstroms (2),
die Mittel für das gezielte Ankoppeln (t, v₁) zum gezielten Ankoppeln des Videosteuersignals (1) der Videokamera oder des Galvanometerantriebsgleichstroms (2) an den dritten Anschluss () des allgemeinen Verbinders (k) der Videokamera,
wobei der zweite Anschluss () des allgemeinen Verbinders (k) der Videokamera, wenn der Verbinder (k) der DC-gesteuerten automatischen Blendenvorrichtung (L₂) an den allgemeinen Verbinder (k) der Videokamera gekoppelt ist, zusätzlich zur Gleichspannung der Stromquelle ein in der Bremsspule (CL₂) erzeugtes Gegenspannungssignal empfängt, der Kondensator die Gleichspannung der elektrischen Spannungsquelle blockiert und das Gegenspannungssignal zur Galvanometersteuerschaltung (p) der Videokamera weiterleitet und die Mittel für das gezielte Ankoppeln (t, v₁) den Galvanometerantriebsgleichstrom (2) an den dritten Anschluss () des Verbinders (k) der Videokamera koppelt, und
wobei die Mittel für das gezielte Ankoppeln (t, v₁), wenn der Verbinder (k) der VS-gesteuerten automatischen Blendenvorrichtung (L₁) an den allgemeinen Verbinder (k) der Videokamera gekoppelt ist, das Videosteuersignal (1) der Videokamera an den dritten Anschluss () des Verbinders (k) der Videokamera koppelt.

3. Videokamera (M6) für das Ankoppeln einer automatischen Blendenvorrichtung, die Folgendes umfasst:
einen allgemeinen Verbinder (k) für das Ankoppeln einer VS-gesteuerten automatischen Blendenvorrichtung (L₁) mit Galvanometersteuerschaltung oder einer DC-gesteuerten automatischen Blendenvorrichtung (L₂) ohne Galvanometersteuerschaltung, wobei der allgemeine Verbinder (k) Anschlüsse aufweist, zu denen ein erster Anschluss () und ein zweiter Anschluss () gehören,
eine elektrische Stromquelle,
eine Galvanometersteuerschaltung (p) und
Mittel für das gezielte Ankoppeln eines Videosteuersignals (1, 2) der Videokamera an den allgemeinen Verbinder (k),
**dadurch gekennzeichnet, dass**
der erste Anschluss () an die eletrische Stromquelle gekoppelt ist,
der zweite Anschluss () über einen Kondensator (C) an die Galvanometersteuerschaltung (p) der Videokamera gekoppelt ist, und
das Mittel für das gezielte Ankoppeln ein Interferenzverhinderungselement (6) und eine Diode (D) umfasst, wobei das Videosteuersignal (1) der Videokamera über das Interferenzverhinderungselement (6) an den allgemeinen Verbinder (k) gekoppelt ist, wobei die Galvanometersteuerschaltung (p) umgangen wird, wenn ein Verbinder einer VS-gesteuerten automatischen Blendenvorrichtung (L₁) an den allgemeinen Verbinder (k) gekoppelt ist, und das Videosteuersignal (1) der Videokamera über die Galvanometersteuerschaltung (p), gefolgt von der Diode (D), an den allgemeinen Verbinder (k) gekoppelt ist, so dass ein von der Galvanometersteuerschaltung (p) ausgegebener Antriebsgleichstrom (2) an den allgemeinen Verbinder (k) gekoppelt ist, wenn ein Verbinder einer DC-gesteuerten automatischen Blendeneinrichtung (L₂) an den allgemeinen Verbinder (k) gekoppelt ist.

4. Videokamera nach Anspruch 3, bei der das Interferenzverhinderungselement eine Diode (6), einen Widerstand, einen Transistor oder einen Kondensator umfasst.

5. Videokamerasystem, das Folgendes umfasst:
eine automatische Blendenvorrichtung mit einer Galvanometerantriebsspule (CL₁), einer Galvanometerbremsspule (CL₂) und einem Verbinder (k),
wobei es sich bei der automatischen Blendenvorrichtung entweder
um eine VS-gesteuerte automatische Blendenvorrichtung (L₁) mit Galvanometersteuerschaltung (p) handelt, die so angekoppelt ist, dass sie ihre Antriebsspule (CL₁) antreibt, wobei ein zweiter Anschluss () ihres Verbinders (k) nicht angekoppelt und ein dritter Anschluss () an einen Eingang ihrer Galvanometersteuerschaltung (p) gekoppelt ist, oder
um eine DC-gesteuerte automatische Blendenvorrichtung (L₂) ohne Galvanometersteuerschaltung, bei der ein erster Anschluss () ihres Verbinders (k) an einen Anschluss ihrer Bremsspule (CL₂) und ein zweiter Anschluss () ihres Verbinders an den anderen Anschluss ihrer Bremsspule gekoppelt ist,
die Videokamera (M6) nach Anspruch 3 oder 4, wobei der allgemeine Verbinder der Videokamera Anschlüsse aufweist, zu denen der erste Anschluss (), der zweite Anschluss () und ein dritter Anschluss () gehören, wobei die Anschlüsse den Anschlüssen des Verbinders der automatischen Blendenvorrichtung entsprechen,
die Galvanometersteuerschaltung (p) der Videokamera für das Empfangen eines Videosteuersignals (1) der Videokamera und das Erzeugen eines Galvanometerantriebsgleichstroms (2) und
die Mittel für das gezielte Ankoppeln zum gezielten Ankoppeln des Videosteuersignals (1) der Videokamera oder des Galvanometerantriebsgleichstroms (2) an den dritten Anschluss () des allgemeinen Verbinders (k) der Videokamera,
wobei das Videosteuersignal (1) der Videokamera (M6) über das Interferenzverhinderungselement (6) an den dritten Anschluss () des allgemeinen Verbinders (k) der Videokamera gekoppelt ist, wobei die Galvanometersteuerschaltung (p) umgangen wird, wenn der Verbinder (k) der VS-gesteuerten automatischen Blendenvorrichtung (L₁) an den allgemeinen Verbinder (k) der Videokamera gekoppelt wird, und
wobei das Videosteuersignal (1) der Videokamera (M6) über die Galvanometersteuerschaltung (p) an den dritten Anschluss () des Verbinders (k) der Videokamera gekoppelt ist, so dass der von der Galvanometersteuerschaltung (p) der Videokamera ausgegebene Galvanometerantriebsgleichstrom (2) über die Diode (D) an den dritten Anschluss () des allgemeinen Verbinders (k) der Videokamera gekoppelt ist, wenn der Verbinder der DC-gesteuerten automatischen Blendenvorrichtung (L₂) an den allgemeinen Verbinder (k) der Videokamera gekoppelt ist.

## Revendications

1. Caméra vidéo (M5) à des fins de connexion d'un objectif à diaphragme automatique comportant :
un connecteur commun (k) permettant de connecter soit un objectif à diaphragme automatique (L₁) du type à commande VS avec un circuit de commande à galvanomètre soit un objectif à diaphragme automatique (L₂) du type à commande CC sans circuit de commande à galvanomètre, le connecteur commun (k) ayant des bornes comprenant une première borne (①) et une seconde borne (②),
une source d'alimentation électrique,
un circuit de commande à galvanomètre (p), et
un moyen (t, v₁) permettant de connecter de manière sélective un signal de commande vidéo (1, 2) de ladite caméra vidéo audit connecteur commun (k),
**caractérisée en ce que**
la première borne (①) est connectée à la source d'alimentation électrique,
la seconde borne (②) est connectée au circuit de commande à galvanomètre (p) de la caméra vidéo par le biais d'un condensateur (C), et
le moyen de connexion sélective comporte :
un seul commutateur analogique (t) permettant de connecter le signal de commande vidéo (1) de ladite caméra vidéo à une troisième borne (③) dudit connecteur commun (k), ceci court-circuitant ledit circuit de commande à galvanomètre (p) quand le connecteur d'un objectif à diaphragme automatique (L₁) du type à commande VS est connecté au connecteur commun (k) et permettant de connecter le signal de commande vidéo (1) de ladite caméra vidéo à la troisième borne (③) dudit connecteur commun (k) par le biais dudit circuit de commande à galvanomètre (p) de sorte qu'un courant continu d'entraînement (2) sorti en provenance dudit circuit de commande à galvanomètre (p) est connecté audit connecteur commun (k) quand le connecteur d'un objectif à diaphragme automatique (L₂) du type à commande CC est connecté au connecteur commun (k), et
un détecteur (8) permettant de détecter une variation de tension ou de courant au niveau de la seconde borne (②) dudit connecteur commun (k), ladite variation de tension ou de courant activant ledit commutateur analogique (t) en fonction du type d'objectif à diaphragme automatique connecté à la caméra.

2. Système de caméra vidéo comportant :
un objectif à diaphragme automatique comprenant une bobine d'entraînement de galvanomètre (CL₁), une bobine de freinage de galvanomètre (CL₂), et un connecteur (k), l'objectif à diaphragme automatique étant soit
un objectif à diaphragme automatique (L₁) du type à commande VS avec un circuit de commande à galvanomètre (p) connecté pour entraîner sa bobine d'entraînement de galvanomètre (CL₁), dans lequel une seconde borne (②) de son connecteur (k) est non connectée et une troisième borne (③) est connectée sur une entrée de son circuit de commande à galvanomètre (p), soit
un objectif à diaphragme automatique (L₂) du type à commande CC sans circuit de commande à galvanomètre et avec une première borne (①) de son connecteur (k) connectée à une borne de sa bobine de freinage (CL₂) et une seconde borne (②) de son connecteur connectée à l'autre borne de sa bobine de freinage,
la caméra vidéo (M5) selon la revendication 1, le connecteur commun de la caméra vidéo ayant des bornes comprenant la première borne (①), la seconde borne (②) et la troisième borne (③), les bornes correspondant aux bornes du connecteur de l'objectif à diaphragme automatique,
la source d'alimentation électrique de la caméra vidéo ayant une tension CC,
le circuit de commande à galvanomètre (p) de la caméra vidéo permettant de recevoir un signal de commande vidéo (1) de la caméra vidéo et de produire un courant continu d'entraînement (2) du galvanomètre,
le moyen de connexion sélective (t, v₁) permettant de connecter de manière sélective le signal de commande vidéo (1) de ladite caméra vidéo ou le courant continu d'entraînement (2) du galvanomètre à la troisième borne (③) du connecteur commun (k) de la caméra vidéo,
dans lequel, quand le connecteur (k) de l'objectif à diaphragme automatique (L₂) du type à commande CC est connecté au connecteur commun (k) de la caméra vidéo, la seconde borne (②) du connecteur commun (k) de la caméra vidéo reçoit un signal de tension inverse généré dans la bobine de freinage (CL₂) en plus de la tension CC de la source électrique, le condensateur bloque la tension CC de la source de tension électrique et passe le signal de tension inverse au circuit de commande à galvanomètre (p) de la caméra vidéo, et le moyen de connexion sélective (t, v₁) connecte le courant continu d'entraînement (2) du galvanomètre à la troisième borne (③) du connecteur (k) de la caméra vidéo, et
dans lequel, quand le connecteur (k) de l'objectif à diaphragme automatique (L₁) du type à commande VS est connecté au connecteur commun (k) de la caméra vidéo, le moyen de connexion sélective (t, v₁) connecte le signal de commande vidéo (1) de la caméra vidéo à la troisième borne (③) du connecteur (k) de la caméra vidéo.

3. Caméra vidéo (M6) à des fins de connexion d'un objectif à diaphragme automatique comportant :
un connecteur commun (k) permettant de connecter soit un objectif à diaphragme automatique (L₁) du type à commande VS avec un circuit de commande à galvanomètre soit un objectif à diaphragme automatique (L₂) du type à commande CC sans circuit de commande à galvanomètre, le connecteur commun (k) ayant des bornes comprenant une première borne (①) et une seconde borne (②),
une source d'alimentation électrique,
un circuit de commande à galvanomètre (p), et
un moyen permettant de connecter de manière sélective un signal de commande vidéo (1, 2) de ladite caméra vidéo audit connecteur commun (k),
**caractérisée en ce que**
la première borne (①) est connectée à la source d'alimentation électrique,
la seconde borne (②) est connectée au circuit de commande à galvanomètre (p) de la caméra vidéo par le biais d'un condensateur (C), et
le moyen de connexion sélective comporte un élément de prévention contre les brouillages (6) et une diode (D), le signal de commande vidéo (1) de ladite caméra vidéo étant connecté par le biais dudit élément de prévention contre les brouillages audit connecteur commun (k), ceci court-circuitant ledit circuit de commande à galvanomètre (p), quand un connecteur d'un objectif à diaphragme automatique (L₁) du type à commande VS est connecté au connecteur commun (k) et le signal de commande vidéo (1) de ladite caméra vidéo étant connecté audit connecteur commun (k) par le biais dudit circuit de commande à galvanomètre (p) suivi de ladite diode (D) de sorte qu'un courant continu d'entraînement (2) sorti en provenance dudit circuit de commande à galvanomètre (p) est connecté audit connecteur commun (k) quand un connecteur d'un objectif à diaphragme automatique (L₂) du type à commande CC est connecté au connecteur commun (k).

4. Caméra vidéo selon la revendication 3, dans laquelle l'élément de prévention contre les brouillages comporte l'un parmi une diode (6), une résistance, un transistor ou un condensateur.

5. Système de caméra vidéo comportant :
un objectif à diaphragme automatique comprenant une bobine d'entraînement de galvanomètre (CL₁), une bobine de freinage de galvanomètre (CL₂), et un connecteur (k),
l'objectif à diaphragme automatique étant soit
un objectif à diaphragme automatique (L₁) du type à commande VS avec un circuit de commande à galvanomètre (p) connecté pour entraîner sa bobine d'entraînement (CL₁), dans lequel une seconde borne (②) de son connecteur (k) est non connectée et une troisième borne (③) est connectée sur une entrée de son circuit de commande à galvanomètre (p), soit
un objectif à diaphragme automatique (L₂) du type à commande CC sans circuit de commande à galvanomètre et avec une première borne (①) de son connecteur (k) connectée à une borne de sa bobine de freinage (CL₂) et une seconde borne (②) de son connecteur connectée à l'autre borne de sa bobine de freinage,
la caméra vidéo (M6) selon la revendication 3 ou la revendication 4, le connecteur commun de la caméra vidéo ayant des bornes comprenant la première borne (①), la seconde borne (②) et une troisième borne (③), les bornes correspondant aux bornes du connecteur de l'objectif à diaphragme automatique,
le circuit de commande à galvanomètre (p) de la caméra vidéo permettant de recevoir un signal de commande vidéo (1) de la caméra vidéo et de produire un courant continu d'entraînement (2) du galvanomètre, et
le moyen de connexion sélective permettant de connecter de manière sélective le signal de commande vidéo (1) de ladite caméra vidéo ou le courant continu d'entraînement (2) du galvanomètre à la troisième borne (③) du connecteur commun (k) de la caméra vidéo,
le signal de commande vidéo (1) de ladite caméra vidéo (M6) étant connecté par le biais dudit élément de prévention contre les brouillages (6) à la troisième borne (③) dudit connecteur commun (k) de la caméra vidéo, ceci court-circuitant ledit circuit de commande à galvanomètre (p), quand le connecteur (k) de l'objectif à diaphragme automatique (L₁) du type à commande VS est connecté au connecteur commun (k) de la caméra vidéo, et
le signal de commande vidéo (1) de ladite caméra vidéo (M6) étant connecté à la troisième borne (③) dudit connecteur (k) de la caméra vidéo par le biais dudit circuit de commande à galvanomètre (p) de sorte que le courant continu d'entraînement (2) du galvanomètre sorti en provenance dudit circuit de commande à galvanomètre (p) de la caméra vidéo est connecté à la troisième borne (③) dudit connecteur commun (k) de la caméra vidéo par le biais de ladite diode (D) quand le connecteur de l'objectif à diaphragme automatique (L₂) du type à commande CC est connecté au connecteur commun (k) de la caméra vidéo.
